# EUROPÄISCHE PATENTSCHRIFT

(11) **EP 0 619 635 B1**
(45) Veröffentlichungstag und Bekanntmachung des Hinweises auf die Patenterteilung: **15.10.1997**
(21) Anmeldenummer: 94105161.7
(22) Anmeldetag: 31.03.1994
(51) Int. Cl.: H02G 3/26, F16L 3/12

(54) **Sammelhalter für Kabel oder Rohre**
Holder for a plurality of cables or tubes
Pièce de soutien pour plusieurs câbles ou tubes

(30) Priorität: 08.04.1993 DE 4311765
(43) Veröffentlichungstag der Anmeldung: 12.10.1994
(73) Patentinhaber: Schnabl, Ludwig, A-3133 Traismauer (AT)
(72) Erfinder: Schnabl, Ludwig, A-3133 Traismauer (AT)
(74) Vertreter: Jaeger, Klaus, Dr.

(56) Entgegenhaltungen:
- DE-U- 9 108 817
- FR-A- 2 188 709

## Beschreibung

Die Erfindung betrifft einen Sammelhalter, insbesondere aus Kunststoff, für Kabel oder Rohre oder dergleichen nach dem Oberbegriff des Anspruchs 1. Insbesondere betrifft die Erfindung einen Sammelhalter, der einen Rastmechanismus aufweist und mit anderen Installationselementen kombinierbar ist.

Sammelhalter werden beim Verlegen von Kabeln oder Rohren recht häufig angewandt, da sie den Vorteil bieten, daß ein Installationselement mehrere Kabel bzw. Rohrleitungen aufnehmen kann und daß auch bei möglicherweise notwendigen Nachrüstungen die Installationsmaterialien durch die bereits vorhandenen Sammelhalterungen geführt werden können, was eine recht große Zeiteinsparung mit sich bringt. Weiterhin hat die Führung von Installationselementen durch Sammelhalter den Vorteil, daß nur geringe bzw. begrenzte Wand- oder Deckenbereiche von Installationsmaterialien überzogen werden.

Aus dem Stand der Technik sind eine Vielzahl von Sammelhaltern bzw. von Schellen bekannt, die Rohre bzw. Kabel aufnehmen und an Wänden bzw. Decken von zu installierenden Räumlichkeiten entlangführen. Bekannt sind hier beispielsweise Bügelschellen, die zum Sammeln von Kabeln oder Rohren übereinander angeordnet werden können. Hierbei können Bügelschellen unterschiedlichen Durchmessers ineinandergerastet werden. Diese ineinanderrastbaren Bügelschellen weisen jedoch den Nachteil auf, daß bei jeder Neuinstallation die hinzuzufügende Bügelschelle recht aufwendig in die schon vorhandenen Bügelschellen eingerastet werden muß. Zum anderen ist diese Art der Sammelhalterung sehr materialintensiv, da an jeder Festlegungsstelle eine neue Bügelschelle aufgerastet werden muß.

Weiterhin sind aus der DE-U- 91 08 817 Kabelsammelhalterungen bzw. Kabelschellen bekannt, welche die gesammelten Kabel bzw. Rohre in einem Bügel aufnehmen. Diese Bügel sind schließbar und können unterschiedliche geometrische Formen aufweisen. Insbesondere weisen diese schließbaren Bügel Ringform oder in etwa rechteckige Form auf. Zur Formstabilisierung sind derartige bekannte Sammelhalter profiliert ausgestaltet, wobei der bewegliche Bügelteil, der zur Freigabe der Halteröffnung bewegbar angelenkt ist, weniger verstärkt ausgestaltet ist. Das Schließen derartiger bekannter Bügelschellen bzw. Sammelhalterungen erfolgt durch Einrasten eines Hakens in eine Einrastöse. Das hakenartige Einrastelement ist dabei formkomplementär der Einrastöse gegenüberliegend angeordnet und wird bei Schließen des Ringes unter Zusammendrücken von zwei federnden Hakenteilen in die Öse eingeführt. Um ein Herausgleiten des Hakens aus der Einrastöse zu verhindern, ist auf dem oberen Ösenschenkel ein Vorsprung angeordnet, welcher die Einrastöse hintergreift und den Haken in der Einrastöse arretiert. Zum Öffnen dieser Bügelverbindung ist es notwendig, die federnd miteinander verbundenen Hakenteile aufeinander zuzubewegen, insbesondere so weit, daß beide Hakenschenkel aufeinander liegen und der Vorsprung so weit nach unten gedrückt wird, daß er aus der die Öse hintergreifenden Stellung herausgelöst wird. Zum Lösen dieser Hakenverbindung ist es also notwendig, den oberen Hakenschenkel senkrecht auf den unteren Hakenschenkel zu drücken und durch eine leichte Zugbewegung in Verbindung mit der senkrechten Druckbewegung den Vorsprung aus der arretierten Stellung herauszulösen, um die Montageöffnung freizugeben.

Nachteilig an dieser Hakenverbindung ist insbesondere, daß es häufig vorkommt, daß die senkrechte Druckkraft, die auf den federnden Hakenschenkel aufgebracht wird, um die Verbindung zu öffnen, zu gering ist und sich der Vorsprung sehr schwer aus dem Hintergriff der Öse herauslösen läßt, so daß es oftmals doch mehrerer Versuche bedarf, diesen Rastmechanismus zu öffnen.

Ausgehend von diesem Stand der Technik ist es die Aufgabe der vorliegenden Erfindung, einen Sammelhalter zu entwickeln, der einen Rastmechanismus bzw. eine Bügelverbindung aufweist, die einfach und schnell handhabbar ist und die insbesondere auch durch das Montagepersonal mit einer Hand zuverlässig geöffnet und geschlossen werden kann.

Diese Aufgabe wird durch einen Sammelhalter nach der Lehre des Anspruchs 1 gelöst.

Weitere Ausgestaltungen der Erfindung sind Gegenstand der Unteransprüche.

Der Sammelhalter weist in seiner einfachsten Ausführung einen Rastmechanismus auf, der als hakenförmig gekrümmtes Formteil ausgebildet ist, das sich nach außen hin, also von der Sammelhalterung weg, bewegbar ausgestaltet ist. Dieses hakenförmig gekrümmte Formteil weist zwei Hakenschenkel auf, von denen ein Hakenschenkel mit dem beweglich angelenkten Schenkel des Grundkörpers der Sammelhalterung verbunden ist. An diesem Hakenschenkel ist ein zweiter Hakenschenkel federnd angelenkt, der sich keilförmig unter Ausbildung einer Rastnase in Öffnungsrichtung verdickt. Dieser verdickte keilförmige Hakenschenkel ist über ein Filmscharnier mit einem im wesentlichen halbrunden , der Form des Widerlagers entgegengesetzt ausgestalteten, Öffnungshebel des Rastmechanismus verbunden. Dieser Rastmechanismus ist am beweglichen Schenkel des Grundkörpers so angeordnet, daß die Einrastöffnung, die ebenfalls am Grundkörper angeordnet ist, genau in dessen Bewegungslinie liegt, so daß bei einer Bewegung des beweglichen Schenkels in Richtung Grundkörper der Rastmechanismus durch ein formkomplementäres Einrastfenster aufgenommen wird.

Der den Rastmechanismus tragende Schenkel des Grundkörpers ist beweglich am Grundkörper so angeordnet, daß die Beweglichkeit durch eine Art Scharnier, also ineinandergreifende miteinander verbundene Formelemente, oder durch ein Filmscharnier an der Verbindungsstelle zum formstabilen Grundkörper gegeben ist. Der Grundkörper ist zur Gewährleistung einer notwendigen Formstabilität in sich stabil ausgestaltet, insbesondere durch entsprechend verstärkte Bügelteile. Diese Formstabilität kann durch eine entsprechende Stärke des umlaufenden Kunststoffbügels gegeben sein, der Kunststoffbügel kann ebenso durch parallel zueinander verlaufende formkomplementäre Kunststoffbügel gestaltet sein, die durch Verstärkungsrippen miteinander verbunden sind.

Am verstärkten Grundkörper des Sammelhalters ist dem Rastmechanismus gegenüberliegend, in Bewegungsrichtung, also in Schließrichtung auf der Bewegungslinie des beweglichen Schenkels liegend, eine dem Rastmechanismus formkomplementäre Einrastöffnung mit einem Einrastfenster zur Aufnahme des Rastmechanismus angeordnet. Über dieser Einrastöffnung ist zwischen Einrastöffnung und Grundkörper ein im wesentlichen halbrunden ausgebildetes Widerlager angeordnet. Dieses Widerlager überspannt den gesamten äußeren Winkel zwischen Grundkörper und Einrastfenster. Das Widerlager kann so ausgestaltet sein, daß es die gesamte Breite des Grundkörpers, also die gesamte Breite des Einrastfensters überspannend einteilig ausgeführt ist, das Widerlager kann ebenso mehrteilig in Form von voneinander beabstandeten einzelnen Widerlagern verschiedener Breiten ausgeführt sein. Das den Winkel zwischen Grundkörper und Einrastfenster überspannende Widerlager kann einteilig in sich geschlossen ausgeführt sein, es können aber im Widerlager auch Entlastungsausnehmungen eingeformt sein, die der Aufnahme von Entlastungskeilen, welche formkomplementär zu den Entlastungsausnehmungen auf dem Öffnunghebel angeordnet sind und bei Schließen des Rastmechanismus in diese Entlastungsausnehmungen eingreifen, dienen. Diese Entlastungskeile haben die Funktion, die sich keilförmig verdickende Rastnase, die beim Schließen des Rastmechanismus das Einrastfenster an seinem oberen Rastösensteg hintergreift zu entlasten und die Stabilität der Rastverbindung nochmals zu sichern. In Abhängigkeit von der Größe des Sammelhalters und der Größe der zu tragenden Installationsmaterialien, sowie in Abhängigkeit vom Gewicht dieser Installationsmaterialien können mehrere Entlastungsausnehmungen am Widerlager und mehrere dazu formkomplementäre Entlastungskeile am Rastmechanismus angeordnet sein.

Am Widerlager sind Verstärkungsrippen ein- oder angeformt. Diese Verstärkungsrippen können den gesamten Widerlagerbereich zwischen Grundkörper und Einrastöffnung überziehen und je nach Breite des Widerlagers auch sowohl links als auch rechts über die Widerlagerbreite hinausragen.

Zum Öffnen des Rastmechanismus ist an dem sich keilförmig verdickenden Hakenschenkel über ein Filmscharnier ein öffnungshebel angelenkt bzw. angeformt. Der Öffnungshebel ist dabei der Form des Widerlagers entgegengesetzt ausgestaltet, insbesondere jedoch halbrund ausgebildet, so daß beim Öffnen des Rastmechanismus Öffnungshebel und Widerlager gegeneinander abrollen. Zum Öffnen des Rastmechanismus wird der Öffnungshebel mit leichtem Druck gegen das Widerlager gepreßt, so daß durch diesen Druck der Öffnungshebel nach Art eines zweiseitigen Hebels am Widerlager anliegt. Dabei werden die auf den Öffnungshebel ausgeübten nach oben verlaufenden Druckkräfte umgeleitet und bewirken eine Verformung des Filmscharniers nach Art einer Abknickung an der dünnsten Filmscharnierstelle. Diese Abknickung erfolgt bei gleichzeitiger Aushebelung der Rastnase aus der Hintergriffstellung bzw. Einraststellung hinter dem oberen Rastösensteg. Beim Aushebeln der Rastnase aus dem oberen Rastösensteg gleitet der Öffnungshebel auf dem Widerlager nach oben und führt die ausgehebelte Rastnase aus dem Einrastfenster heraus. Zu Beginn des Öffnungsvorganges des Rastmechanismus, bei dem der Öffnungshebel gegen das Widerlager gedrückt wird und das Ein/Abknicken des Filmscharniers beginnt, zieht das Filmscharnier aufgrund der Hebelwirkung die beiden federnd miteinander verbundenen Hakenschenkel des Rastmechanismus gegeneinander, was gleichzeitig ein Aushebeln der Rastnase bewirkt und den unteren Hakenschenkel welcher den unteren Rastösensteg übergreift leicht in Richtung des oberen Rastösensteges drückt, so daß beide Hakenschenkel ohne sich zu verklemmen oder zu verkeilen aus dem Einrastfenster herausgleiten. Die beidseitige Hebelwirkung, die durch Anlegen des Öffnungshebels an das Widerlager auf den Rastmechanismus ausgeübt wird, bewirkt, daß durch relativ geringe Druckkraft der Rastmechanismus schnell und einfach geöffnet wird. Diese Aufwärtsbewegung des Öffnungshebels gegen das Widerlager hat den Vorteil, daß insbesondere bei Deckeninstallationen lediglich ein geringer Druck von unten genügt, um die Montageöffnung der Sammelhalterung freizugeben. Ein Öffnen dieses Rastmechanismus ist durch die Hebelwirkung derart einfach und unkompliziert geworden, daß sogar ein leichter Druck mit einem Werkzeug gegen den Öffnungshebel schon den Rastmechanismus ausklinken läßt, ohne daß er sich verklemmt.

Am Grundkörper des Sammelhalters ist mindestens ein Befestigungselement zur Festlegung des Halters bei der Installation angeformt. Insbesondere ist dieses Befestigungselement nach Art eines Spreizdübels ausgestaltet, so daß der Sammelhalter auf recht einfache Weise in eine vorbereitete Bohrung eingeschoben werden kann und in dieser festen Halt erlangt. Am Grundkörper des Sammelhalters sind Ausnehmungen bzw. Durchbrüche eingeformt, durch welche Befestigungselemente hindurchgeführt werden können und eine Festlegung des Sammelhalters entweder zusätzlich zur Festlegung über den Spreizdübel oder gewünschtenfalls auch ohne Spreizdübel ermöglichen.

Am Grundkörper des Sammelhalters können weitere Befestigungselemente, wie zusätzliche Sammler oder Schellen, die eine große Variationsvielfalt der zu verwendenden Installationsmaterialien ermöglichen, angeformt sein.

Im einfachsten Fall besteht der Sammelhalter aus einem Grund-körper mit einem beweglichen Schenkel und einem Rastmechanismus. Der Sammelhalter kann aber auch so ausgestaltet sein, daß mindestens zwei Sammelhalter symmetrisch zueinander angeordnet sind. Insbesondere weist diese symmetrische Sammelhalteranordnung einen gemeinsamen Grundkörperrücken auf, an dem mindestens zwei bewegliche Schenkel mit Rastmechanismus und entsprechend komplementären Einrastöffnungen angeordnet sind. Bei der Anordnung von mehreren beweglichen Schenkeln an einander symmetrischen Grundkörpern können beide Grundkörper Festlegungselemente aufweisen, es kann auch an der Symmetrieachse der Grundkörperrücken ein Festlegungselement nach Art eines Spreizdübels angeordnet sein. Möglich ist auch die Festlegung dieses sogenannten Doppelsammlers durch zusätzliche Festlegungselemente, die durch Ausnehmungen bzw. Bohrungen im Grundkörper geführt werden.

Gleichzeitig können am beweglichen Schenkel des formstabilen Grundkörpers unterhalb des Rastmechanismus an der Innenseite des Bügelschenkels Zapfen angeformt sein. Insbesondere sind diese Zapfen vom unteren Hakenschenkel des Rastmechanismus derart beabstandet angeordnet, daß der untere Rastösensteg beim Einrasten des hakenförmigen Formteiles zwischen den unteren Hakenschenkel und den innen am beweglichen Bügelschenkel angeordneten Zapfen geführt wird. In Abhängigkeit von der Größe der Ausführungsform des Sammlers können an der Innenseite des beweglichen Bügelschenkels auch mehrere Zapfen nebeneinander so angeordnet werden, daß sie eine regelrechte Führungsbahn für den unteren Rastösensteg bilden.

Die Einrastöffnung, welche aus Einrastfenster und oberem sowie unterem Rastösensteg besteht, die über seitliche Stege miteinander verbunden sind und am Grundkörper sich in Richtung Anlenkpunkt des beweglichen Schenkels erstreckend angeordnet sind, neigt sich leicht in Richtung des Grundkörpers, ist also mit anderen Worten in Richtung Grundkörper leicht abgewinkelt am Grundkörper angeformt. Diese abgewinkelte Anformstellung bringt den Vorteil mit sich, daß der Rastmechanismus schnell und einfach schließbar ist und im geschlossenen Zustand der bewegliche Schenkel annähernd parallel zum Grundkörper verläuft was der gesamten Installation eine sehr gute Optik vermittelt und den doch leicht geneigt am Grundkörper angelenkten beweglichen Schenkel in geschlossener Stellung nahezu geradlinig, bzw. parallel zum Grundkörper angeordnet, erscheinen läßt.

Am Grundkörper des Sammelhalters kann gleichzeitig eine Anreihschiene angeordnet sein, über welche weitere Installationselemente problemlos an den Grundkörper des Sammelhalters angekoppelt werden können.

Im folgenden wird die Erfindung anhand eines Ausführungsbeispiels in Verbindung mit den beiliegenden Zeichnungen näher erläutert.

Es zeigt:
- Fig. 1: die schematische Darstellung eines Sammelhalters mit beweglich angelenktem Schenkel in geöffneter und geschlossener Position;
- Fig. 2: die schematische Darstellung eines Doppelsammelhalters; zwei symmetrisch zueinander einstückig angeordnete Sammelhalter und;
- Fig. 3: die schematische Darstellung eines Sammelhalters mit Entlastungskeil und Entlastungsausnehmung in geöffneter und geschlossener Position des beweglichen Schenkels.

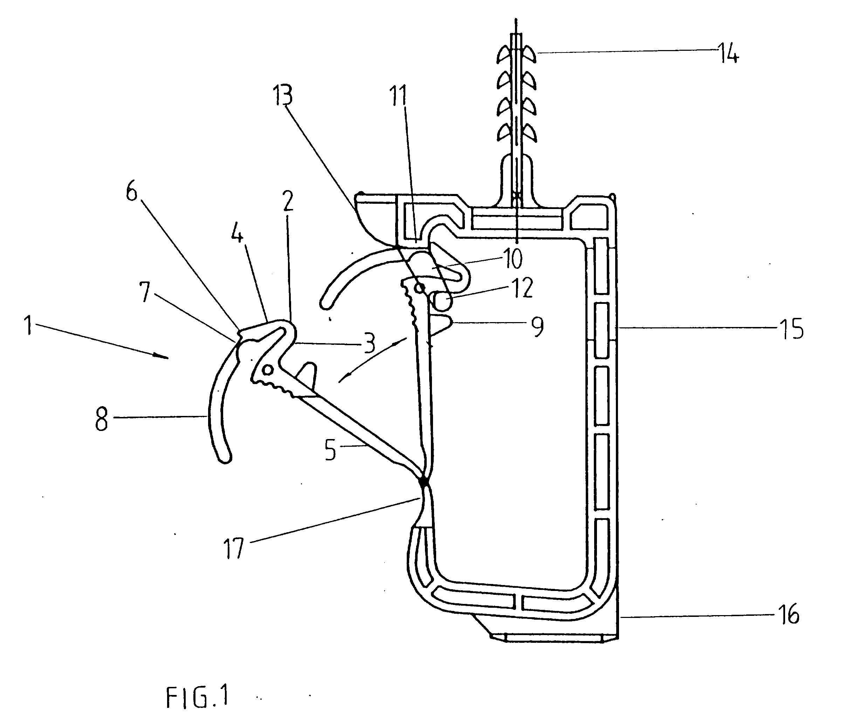

In Fig. 1 ist ein Ausführungsbeispiel einer erfindungsgemäßen Sammelhalterung in Form eines Einzelsammlers dargestellt. Der Einzelsammler besteht aus einem Grundkörper 15 mit einer Anreihschiene 16. Am Grundkörper 15 ist über den Anlenkpunkt 17 ein beweglicher Schenkel 5 angelenkt. Dieser bewegliche Schenkel 5 trägt den Rastmechanismus 1, der aus einem gekrümmten Formteil 2 besteht, das über den Hakenschenkel 3 mit dem beweglichen Schenkel 5 verbunden ist. Am Hakenschenkel 3 ist federnd ein Hakenschenkel 4 angelenkt. Dieser Hakenschenkel 4 verdickt sich keilförmig unter Ausbildung der Rastnase 6 in Öffnungsrichtung des beweglichen Schenkels 5. Am Hakenschenkel 4 ist mittig an der Rastnase 6 über die gesamte Hakenschenkelbreite 4 über ein Filmscharnier 7 ein halbrunder, der Form des Widerlagers entgegengesetzt ausgestalteter, Öffnungshebel 8 angeformt. Das Filmscharnier 7 ist dabei mittig an der Rastnase 6 so angelenkt, daß die keilförmige Rastnase 6 in Schließrichtung wiederum keilförmig abgeschrägt ist, so daß die Rastnase 6 in Schließrichtung und in Richtung auf das Filmscharnier zu abgeschrägt ist. Unterhalb des Hakenschenkels 3, mittig am beweglichen Schenkel 5, ist ein Zapfen 9, beabstandet vom Hakenschenkel 3, angeordnet. Dem Rastmechanismus 1 gegenüberliegend, auf der Bewegungslinie des Schenkels 5 in Schließrichtung, ist ein Rastfenster 10 angeordnet. Das Rastfenster 10 besteht aus einem unteren Rastösensteg 12 und einem oberen Rastösensteg 11. Die Rastösenstege 11 und 12 sind über seitliche Stege miteinander verbunden. Das Rastösenfenster 10 ist am Grund-körper 15 in Richtung des Grundkörpers 15 leicht abgewinkelt angeformt. Zwischen Rastfenster 10 und Grundkörper 15 erstreckt sich das Widerlager 13. Das Widerlager 13 überspannt den gesamten äußeren Winkel zwischen Grundkörper 15 und Rastfenster 10 und ist im wesentlichen halbrund ausgebildet. Das Widerlager 13 ist mittig am Grundkörper 15 angeformt und weist eine Breite von annähernd 20% der Breite des Öffnungshebels 8 auf. Im unteren Viertel wird das Widerlager 13 rechtwinklig von einer Verstärkungsrippe geschnitten, die sich beidseitig des Widerlagers 13 über annähernd die Hälfte der Breite des Öffnungshebels 8 erstreckt.

Zum Schließen des Rastmechanismus 1 wird der bewegliche Schenkel 5 in Richtung auf den Grundkörper 15 gedrückt, so daß das gekrümmte Formteil 2 in das formkomplementär ausgestaltete Rastfenster 10 eindringt. Beim Eindringen des gekrümmten Formteiles in das Rastfenster 10 werden die federnd miteinander verbundenen Hakenschenkel 3 und 4 leicht aufeinanderzugedriickt, bis die Rastnase 6 hinter den oberen Rastösensteg 11 des Rastfensters 10 einrastet. Der untere Rastösensteg 12 wird über den Zapfen 9 zwischen dem Hakenschenkel 3 und den Zapfen 9 festgelegt. Zum Öffnen der Rastverbindung wird der öffnungshebel 8 mit leichtem Druck gegen das Widerlager 13 angedrückt, so daß die über die beidseitigen Hebel wirkenden Druckkräfte das Filmscharnier 7 faltend verformen, wobei die Rastnase 6 aus dem Hintergriff des oberen Rastösensteges 11 herausgehebelt wird und sich durch Abrollen des Öffnungshebels 8 auf dem Widerlager 13 während des Andrückens leicht und einfach aus dem Rastfester 10 herausgelöst wird.

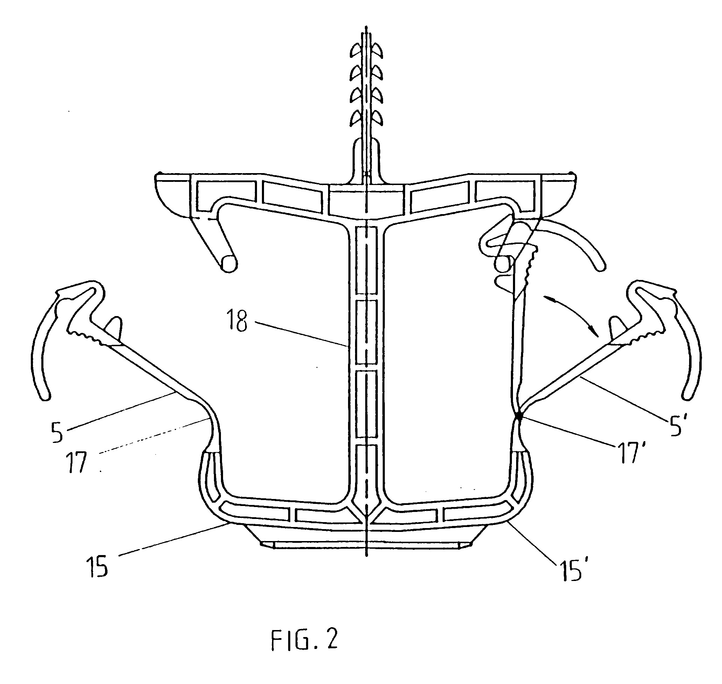

Fig. 2 zeigt in schematischer Darstellung eine Doppelsammelhalterung, die im wesentlichen die gleichen Bestandteile wie der vorab beschriebene Sammelhalter aufweist. Der Grundkörper 15 ist bei dem vorliegenden Doppelsammelhalter jedoch durch den gemeinsamen Grundkörperrücken 18 ersetzt, der wiederum in zwei Grundkörper 15 und 15' übergeht, an denen bewegliche Schenkel 5 und 5' über eine Art verstärktes Filmscharnier 17 und 17' beweglich angeformt sind. Der bewegliche Schenkel 5' ist dabei einmal in geöffneter und einmal in Einrastposition schematisch dargestellt.

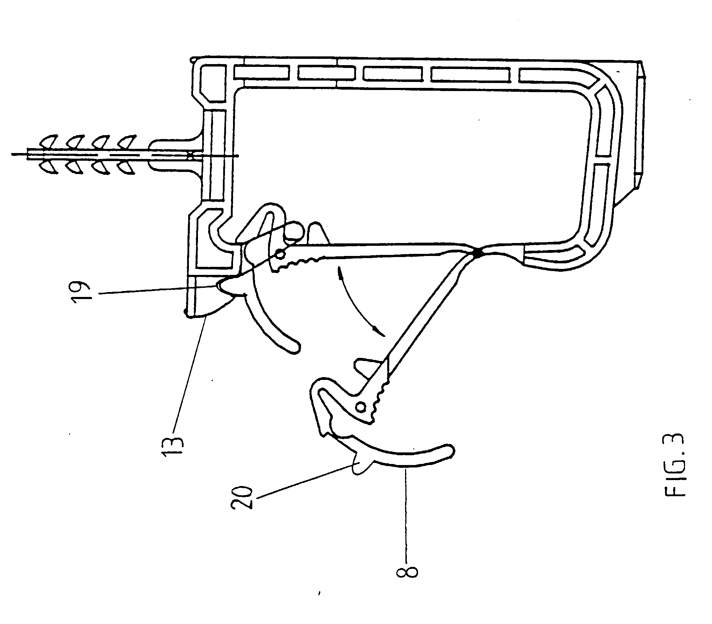

Fig. 3 zeigt eine Sammelhalterung ähnlich der Sammelhalterung aus Fig. 1 mit im wesentlichen gleichem Aufbau. Der Sammelhalter in Fig. 3 weist in Veränderung zur Fig. 1 auf dem Öffnunghebel 8 einen Entlastungskeil 20 auf, der bei geschlossenem Rastmechanismus in die Entlastungsausnehmung 19 des Widerlagers 13 einrastet und der Stabilisierung der Rastverbindung dient.

## Patentansprüche

1. Sammelhalter, insbesondere aus Kunststoff, für Kabel oder Rohre, mit einem im wesentlichen formstabilen, nach einer Seite hin offenen, verschließbaren Grundkörper (15), an dem ein Schenkel (5) beweglich angelenkt ist, welcher an seinem dem Anlenkpunkt (17) gegenüberliegenden Ende einen lösbaren Rastmechanismus (1) aufweist, der zum Schließen der Sammelhalterung in ein formkomplementäres Einrastfenster (10) eingreift,
und daß der Rastmechanismus (1) ein hakenförmig gekrümmtes, sich nach aussen öffnendes Formteil (2) aufweist, dessen einer Hakenschenkel (3) mit dem beweglich angelenkten Schenkel (5) verbunden ist und dessen anderer Hakenschenkel (4) sich keilförmig unter Ausbildung einer Rastnase (6) verdickt,
daß am Grundkörper (15), dem Rastmechanismus gegenüberliegend, über der Einrastöffnung des den Rastmechanismus (1) aufnehmenden Einrastfensters (10) ein im wesentlichen halbrund ausgebildetes Widerlager (13) angeordnet ist und
daß in über ein Filmscharnier (7) mit dem die Rastnase (6) bildenden Hakenschenkel (4) verbundener Öffnungshebel (8) im wesentlichen halbrund, der Form des Widerlagers entgegengesetzt ausgestaltet ist, so daß Widerlager (13) und Öffnungshebel (8) zum Öffnen des Rastmechanismus (1) gegeneinander abrollen.

2. Sammelhalter nach Anspruch 1,
dadurch **gekennzeichnet,**
daß das Widerlager (13) zumindest im wesentlichen den gesamten äußeren Winkel zwischen Grundkörper (15) und Einrastfenster (10) überspannt.

3. Sammelhalter nach den Ansprüchen 1 und 2,
dadurch **gekennzeichnet**,
daß am Widerlager (13) eine Entlastungsausnehmung (19) zur Aufnahme eines Entlastungskeiles (20) eingeformt ist und/oder Verstärkungsrippen ein- und/oder angeformt sind.

4. Sammelhalter nach den Ansprüchen 1 bis 3,
dadurch **gekennzeichnet**,
daß auf dem Öffnungshebel (8) ein Entlastungskeil (20) der Entlastungsausnehmung (19) formkomplementär so angeordnet ist, daß der Entlastungskeil (20) bei geschlossenem Rastmechanismus (1) in diese Entlastungsausnehmung (19) eingreift.

5. Sammelhalter nach einem der vorgenannten Ansprüche 1 bis 4,
dadurch **gekennzeichnet**,
daß am Grundkörper (15) des Sammelhalters mindestens ein Befestigungselement, insbesondere nach Art eines Spreizdübels (14), zur Festlegung des Sammelhalters angeformt ist und eine Anreihschiene (16) zum Ankoppeln weiterer Installationselemente angeformt ist oder weitere Befestigungselemente angeformt sind.

6. Sammelhalter nach den Ansprüchen 1 bis 5,
dadurch **gekennzeichnet**,
daß mindestens zwei Sammelhalter symmetrisch zueinander, einstückig, insbesondere mit einem gemeinsamen Grundkörperrücken (18), angeordnet sind.

7. Sammelhalter nach einem der vorgenannten Ansprüche 1 bis 6,
dadurch **gekennzeichnet,**
daß die beiden Hakenschenkel (3) und (4) federnd spreizend zur Bildung des hakenförmigen Formteiles (2) miteinander verbunden und die keilförmige verdickte Rastnase (6) des Hakenschenkels (4) so angeordnet ist, daß sie beim Einbringen des Rastmechanismus (1) in das Einrastfenster (10) deren oberen Steg hintergreift.

8. Sammelhalter nach einem der vorgenannten Ansprüche 1 bis 7,
dadurch **gekennzeichnet**,
daß unterhalb des hakenförmigen Formteiles (2) von diesem beabstandet innen am Bügelschenkel (5) mindestens ein Zapfen (9) so angeformt ist, daß der so gebildete Zwischenraum den unteren Rastösensteg (12) des Einrastfensters aufnimmt.

9. Sammelhalter nach einem der vorgenannten Ansprüche 1 bis 8,
dadurch **gekennzeichnet**,
daß das Einrastfenster (10) am formstabilen Grundkörper (15) sich in Richtung Anlenkpunkt (17) des beweglichen Schenkels (5) erstreckend, diesem im wesentlichen gegenüberliegend, leicht in Richtung Grundkörper (15) abgewinkelt, angeformt ist.

## Claims

1. A holder, more particularly of plastic, for a plurality of cables or tubes, comprising a substantially dimensionally stable main member (15) which is open on one side but closable, an arm (5) being movably articulated on said main element and having at its end remote from the point of articulation (17) a releasable detent mechanism (1) which, to close the holder, engages in an engagement window (10) of matching shape, and in that the detent mechanism (1) comprises a shaped member (2) which is curved in the form of a hook and opens outwardly and one limb (3) of which is connected to the movably articulated limb (5) and the other limb (4) of the hook is thickened in the form of a wedge to form a detent lug (6), in that a substantially semi-circular abutment (13) is provided on the main element (15) opposite the detent mechanism above the engagement aperture of the engagement window (10) receiving the detent mechanism (1) and in that an opening lever (8) connected via an integral hinge (7) to the hook limb (4) forming the detent lug (6) is made substantially semi-circular in opposition to the shape of the abutment so that the abutment (13) and the opening lever (8) roll relatively to one another for the purpose of opening the detent mechanism (1).

2. A holder according to claim 1, characterised in that the abutment (13) at least substantially spans the entire outer angle between the main element (15) and the engagement window (10).

3. A holder according to claims 1 and 2, characterised in that a relief recess (19) is formed on the abutment (13) to accommodate a relief wedge (20) and/or reinforcing'ribs are formed in and/or on the abutment.

4. A holder according to claims 1 to 3, characterised in that a relief wedge (20) of the relief recess (19) is so disposed on the opening lever (8) with matching shape that the relief wedge (20) engages in said relief recess (19) when the detent mechanism (1) is closed.

5. A holder according to any one of the preceding claims 1 to 4, characterised in that at least one fixing element, more particularly after the style of an expanding dowel (14), is integrally formed on the main element (15) of the holder to fix the latter and an attachment rail (16) for coupling other installation elements is integrally formed or other fixing elements are integrally formed.

6. A holder according to any one of claims 1 to 5, characterised in that at least two holders are arranged symmetrically to one another integrally, particularly with a common main element spine (18).

7. A holder according to any one of the preceding claims 1 to 6, characterised in that the two hook limbs (3, 4) are interconnected so as to resiliently expand to form the hook-shaped part (2) and the detent lug (6) having the wedge-shaped thickening on the hook limb (4) is so disposed that on introduction of the detent mechanism (1) into the engagement window (10) it engages behind the upper web thereof.

8. A holder according to any one of the preceding claims 1 to 7, characterised in that at least one stud (9) is so formed beneath the hook-shaped part (2) spaced therefrom inside the limb (5) that the resulting intermediate space accommodates the bottom detent eye web (12) of the engagement window.

9. A holder according to any one of the preceding claims 1 to 8, characterised in that the engagement window (10) is integrally formed on the dimensionally stable main element (15) extending in the direction of the point of articulation (17) of the movable limb (5), substantially opposite the latter, with a slight bend in the direction of the main element (15).

## Revendications

1. Support multiple, en particulier en matière plastique, pour des câbles ou des tubes, comportant un corps de base (15) de forme essentiellement stable, refermable, ouvert d'un côté, corps sur lequel s'articule un bras mobile (5) qui présente, à son extrémité opposée au point d'articulation (17), un mécanisme de blocage (1) libérable, qui, pour fermer la fixation multiple, s'engage dans une fenêtre d'encliquetage (10), de forme complémentaire,
caractérisé
en ce que le mécanisme de blocage (1) présente une pièce de forme (2) coudée, formant crochet, dont une des branches (3) du crochet est relié au bras mobile (5) articulé et dont l'autre branche de crochet (4) qui s'épaissit en forme de coin en formant un nez de blocage (6),
en ce que, sur le corps de base (15), en face du mécanisme de blocage, est disposé un contre-appui (13), réalisé essentiellement en demi-rond, au-dessus de l'ouverture d'encliquetage de la fenêtre d'encliquetage (10) recevant le mécanisme de blocage (1),
et en ce qu'un levier d'ouverture (8), relié par l'intermédiaire d'un film-charnière (7), à la branche de crochet (4) formant le nez de blocage (6), est réalisé essentiellement en demi-rond, avec une forme inverse à celle du contre-appui, de telle façon que le contre-appui (13) et le levier d'ouverture (8) roulent l'un sur l'autre pour l'ouverture du mécanisme de blocage (1).

2. Support multiple suivant la revendication 1, caractérisé en ce que le contre-appui (13) recouvre essentiellement au moins la totalité de l'angle extérieur entre le corps de base (15) et la fenêtre d'encliquetage (10).

3. Support multiple suivant les revendications 1 et 2, caractérisé en ce que, sur le contre-appui (13), est formé un évidement de dégagement (19) destiné à recevoir un coin de dégagement (20) et/ou que des nervures de renfort sont formées à leur intérieur et/ou sur eux.

4. Support multiple suivant les revendications 1 à 3, caractérisé en ce que, sur le levier d'ouverture (8), est disposé un coin de dégagement (20) présentant une forme complémentaire à l'évidement de dégagement (19), de telle façon que le coin de dégagement (20) fasse prise dans cet évidement de dégagement (19) quand le mécanisme de blocage (1) est fermé.

5. Support multiple suivant l'une des revendications précédentes 1 à 4, caractérisé en ce que, sur le corps de base (15) du support multiple, est formé au moins un organe de fixation, en particulier du genre cheville à expansion (14), destiné à maintenir le support multiple, et en ce qu'un rail d'enfilage (16), destiné à l'accouplement avec d'autres organes d'installation, est formé sur le corps de base (15), ou que d'autres organes de fixation sont formés sur le corps de base (15).

6. Support multiple suivant les revendications 1 à 5, caractérisé en ce qu'au moins deux supports multiples sont disposés symétriquement l'un par rapport à l'autre, en formant une seule pièce, en particulier avec un dos commun (18) du corps de base.

7. Support multiple suivant l'une des revendications précédentes 1 à 6, caractérisé en ce que les deux branches de crochet (3) et (4) sont reliées l'une à l'autre avec une expansion élastique, pour former la pièce de forme (2) en crochet, et que le nez de blocage (6) de la branche de crochet (4), s'épaississant en forme de coin, est disposé de façon que, lors de l'introduction du mécanisme de blocage (1) dans la fenêtre d'encliquetage (10), ce nez fasse prise par derrière sur sa barre supérieure.

8. Support multiple suivant l'une des revendications précédentes 1 à 7, caractérisé en ce qu'en dessous de la pièce de forme (2) en crochet, à une certaine distance de celle-ci, à l'intérieur du bras d'étrier (5), est formé au moins un ergot (9), de façon que l'espace intermédiaire ainsi formé reçoive la barre inférieure (12) de l'oeillet de blocage de la fenêtre d'encliquetage (10).

9. Support multiple suivant l'une des revendications précédentes 1 à 8, caractérisé en ce que la fenêtre d'encliquetage (10) est formée sur le corps de base (15), de forme stable, en s'étendant en direction du point d'articulation (17) du bras mobile (5), essentiellement à l'opposé de celui-ci, en formant un léger angle vers le corps de base (15).
